# EUROPEAN PATENT APPLICATION

(11) **EP 1 938 929 A1**
(43) Date of publication of application: **02.07.2008**
(21) Application number: 06026514.7
(22) Date of filing: 21.12.2006
(51) Int. Cl.: B25J 19/00

(54) **Manipulator of a parallel kinematic structure**

(71) Applicant: ABB Research Ltd., 8050 Zürich (CH)
(72) Inventor: Wäppling, Daniel, 72218 Västerås (SE); Fors, Michael, 72246 Västerås (SE)

(57) **Abstract**

A manipulator of a parallel kinematic design for use in an environment with strict hygienic requirements having a stationary element (S) with a plurality of drive means (2) and arms (3) attached to said drive means (2) for moving a movable element (5) by means of linkages (4), wherein the stationary element (S) has a base for supporting said drive means (2) and arms (3), and said base comprising a first part (15) serving as the load carrying part of the base and a second part (16) partially exposed outside an enclosure (6) shielding the base from the environment, wherein the second part (16) only is made of a more resistant and accordingly a more expensive material.

## Description

### TECHNICAL FIELD

The invention relates to a manipulator of a parallel kinematic structure, which, with the assistance of a control unit, forms an industrial robot for primarily picking purposes. In particular, the invention relates to a manipulator with three arms by means of which a movable member, comprised in the manipulator, is brought to arbitrary positions in space with retained orientation and inclination.

### BACKGROUND OF THE INVENTION

An industrial robot comprises a manipulator and a control equipment, whereby the manipulator with the assistance of the control equipment carries out arbitrary operations within a working range. Usually, such a manipulator comprises a plurality of arms which support a hand, on which a tool is arranged. In the majority of robot applications, a traditional six-axis manipulator is used, which exhibits sufficient movability to carry out a wide range of operations with mostly very high accuracy. For certain applications, however, there is a need of a manipulator, which has fewer degrees of freedom, but which permits faster operations. Such a manipulator may be mechanically connected in such a way that the tool-carrying hand is all the time oriented in space in a predetermined manner.

From US 4,976,582 a manipulator is previously known by means of which a movable element in relation to a stationary element may be moved in a space with retained orientation and retained inclination. The manipulator has three arms which jointly support the movable element. Each of these arms is rotatably journalled in the stationary element around a respective first axis. The arm supports a linkage, one end of which is rotatably journalled in the outer part of the arm, allowing a movement in two degrees of freedom. In its other end, the linkage supports the movable element and is journalled therein, allowing a movement in two degrees of freedom.

The linkage comprises two parallel links and is arranged, together with the arm, such that one of the degrees of freedom of each end of the linkage constitutes a rotation around an axis which is parallel to the first axis of the respective arm. Irrespective of the movements of the arm or the linkage, these three axes of rotation are thus kept in parallel. In this way, the movable element will always have the same orientation and inclination in relation to the stationary element. One condition, however, is that the respective first axes of the arms form an angle with each other.

When working in spaces where there are hygienic requirements, a manipulator may not emit any smell, fluid or dirt which may cause sanitary inconvenience in this space. Activities in such spaces often give off dirt and fluids which accumulate on the manipulator and which are then emitted therefrom. If the manipulator is not washed regularly it is unevitable that dirt assembled on the outer structure can come loose. The manipulator shall be capable of being flushed and still capable of diverting heat given off by the drive means. During start-up of the manipulator in a cold space, the drive means shall be capable of being preheated.

A manipulator, according to prior art, fulfilling said hygienic requirements is disclosed in document WO 00/29177. The manipulator presented in said document fulfills the requirements by means of arranging an enclosure forming a closed system surrounding the drive means of the manipulator. Within this enclosure, a coolant, which may be air, is pressed through the motors of the drive means. The coolant then delivers the absorbed heat to an external cooling system. During cold start of the manipulator, heat is instead supplied to the motors via the coolant.

The enclosure is closed with such a tightness that it is capable of being flushed without liquid penetrating into the enclosure and there causing damage to the manipulator. The whole manipulator including the enclosure is formed with smooth surfaces without folds or pockets which may attract dirt. Dirt or liquid, given off from the motors, is collected within the enclosure. Parts of the stationary element are exposed to the space outside the enclosure. Such parts are today, as an example, molded and made of stainless steel and thus pretty expensive to produce.

It is therefore one object of the present invention to find a solution to drawbacks of the described prior art.

### SUMMARY OF THE INVENTION

An aspect of the invention is to present ways and means of manufacturing a manipulator of a parallel kinematic structure, wherein the manipulator is arranged such that it may be used in spaces with hygienic requirements. The manipulator shall be prevented from giving off smell, fluid or dirt. It shall be capable of being flushed. It shall be capable of diverting heat given off by drive means. The manipulator shall further be implemented in such a way and of such materials that the cost to manufacture it will become substantially reduced.

The term manipulator, herein, at least refers to manipulators of a parallel kinematic design, in the art known under the concepts Delta and Tau configurations. Said manipulators have a base for attachment of the manipulator to an external structure and for supporting the transmission system. The manipulator is further provided with arms and a linkage system carrying and performing movements of a platform. A manipulator of the described type may be used for different industrial purposes, such as picking, packing, loading, forming, assembling, etc.

The aspect is achieved according to the invention by a manipulator according to the features described in the characterizing portion of the independent claim and with a method according to the features of the independent method claim.

Further embodiments and advantageous features of the invention are presented in the dependent claims.

Today, the stationary element of the manipulator includes a load carrying member, a base, supporting the drive means and gears of the manipulator. The base has a base plate accommodating said drive means and said gears in pre-formed cavities for receiving said equipment. Furthermore, said base has a border along its circumference for protecting the equipment against the surroundings. The enclosure, shielding the equipment towards the surroundings, comprises two caps, one upper cap and one lower cap. The upper cap abuts an upper edge of the border of the base, whilst the lower cap abuts a lower edge of the border of the base.

Due to the requirements by the users with respect to hygienic aspects, such as a necessity to flush the stationary element, including exposed parts of the base and the enclosure, the material of the stationary element has to be of durable material resistant to both alkalic and acid detergents. For that reason, in places with the mentioned strict hygienic requirements, today, said base and the enclosure are preferably made of stainless steel or carbon fibre composites.

Said base is rather thick and has a rather complicated structure. The base is the load carrier of the stationary element and as such has to be exposed outside the enclosure for mounting purposes. Parts of the base exposed to the space outside the enclosure are used for attachment of the manipulator to an external structure carrying the manipulator. As the base has to carry the load and as the base is further exposed to the environment around the manipulator, the material forming the base has to be resistant to chemicals and approved of being used in food industry. Consequently, said material is expensive. Still further, it is an advantage to have as few seals as possible between the base and the parts of the enclosure to arrive at a hermetically sealed base enclosure.

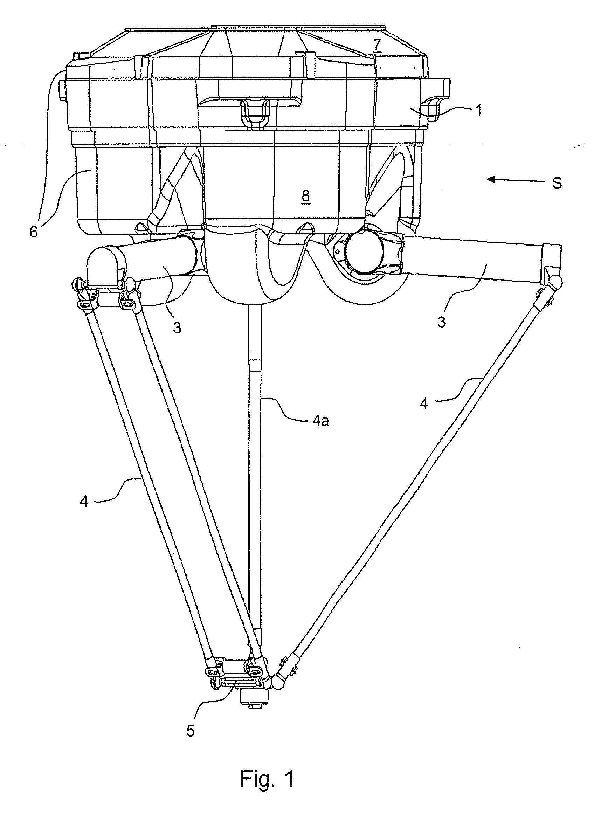

As discussed above, due to the high hygienic demands on the stationary element S, the base has in the prior art been performed of stainless steel structure, being molded to adapt to the design of the stationary element S, as in the prior art device (Fig. 1) the border along the circumference of the base is visible and thus exposed to the surroundings of the manipulator. Through this arrangement it has been permitted to flush and clean the manipulator utilizing high pressure water cleaner or the like. Because of this, today the whole base has been made of said material resistant to acid and alkalic detergents, as its border is exposed to the atmosphere around the manipulator and the base has thus been pretty expensive to produce.

According to the invention, the abovementioned advantageous aspects of the invention are achieved by dividing the base of the stationary element into at least two parts, a first part of the base being completely accommodated inside the enclosure and not exposed to the surroundings, and a second part of the base being partially exposed to the surroundings of the stationary element. The second part of the base may then be made of a chemically resistant material and the first part of the base can be made of a substantially cheaper material. Said first part of the base can be the substantially larger/heavier part of the base and/or it can be that part of the base that requires the major part of the shaping or machining.

Said aspect of the invention is, according to one embodiment, achieved by performing a substantially central part of the base, a first part herein called the base plate with its more complicated structure, of a cheap material, and a second part herein called the base frame of a more resistant and durable material, e.g. a chemically resistant material, such as stainless steel or a composite. Said base frame can be a smaller portion of the base and/or a portion of the base being of a more simple design than the base plate.

Said base frame, having parallel, smooth upper and lower surfaces, is attached to the rim of the base plate for supporting the upper cap and the lower cap at its upper and lower surfaces, respectively, and also to serve as the member of the base for said attachment purposes. The arrangement is achieved by means of performing a flat, circumferential path at the rim of said base plate, whereupon said base frame is attached to said path of the base plate in such a way that the base frame extends farther radially than any part of the base plate, which implies that the base plate will not be exposed outside the enclosure, when the upper and lower caps forming said enclosure bear on the upper and lower surfaces of the base frame.

### BRIEF DESCRIPTION OF THE DRAWINGS

Fig. 1 shows a perspective view of a prior art manipulator of the same kind as the manipulator according to the invention. The drive means are enclosed in an enclosure.
Fig. 2 shows a perspective view of an example of a complete base of the stationary element of the manipulator.
Fig. 3 shows a perspective view of the members of the base of Fig. 2, wherein an example of a design of the base plate and the base frame are illustrated separated from each other.
Fig. 4 shows a perspective view of a manipulator having the base according to the invention.

### DESCRIPTION OF EMBODIMENTS

Below the invention will be explained in greater detail by description of embodiments with reference to the accompanying drawings.

The manipulator shown in Fig.1 comprises a stationary element S, to which three drive means (concealed) are attached. To each drive means there is attached an arm 3 which, via a linkage 4, supports a movable element 5. Further, a telescopic arm 4a is arranged between the stationary element S and the movable element 5. The three arms 3 with their linkages are identical in the example, and therefore only one of the three arms has been provided with a reference numeral. The three drive means are enclosed within an enclosure 6 which has an upper cap 7 and a lower cap 8. The lower cap 8 is arranged such that liquid and dirt, possibly emitted from the drive means and their motors, are collected inside the enclosure 6.

Inside the enclosure 6, a coolant may circulate. Said coolant may be air circulated by means of a fan, but embodiments without a fan are also possible to apply. Cooling air from an external source connected to the inside of the enclosure is a further alternative.

By enclosing the drive means of the manipulator, in this way, in an enclosure 6, which is tight in relation to the space where the manipulator is working, the manipulator may be used for operations in environments involving strict hygienic requirements. In an advantageous embodiment, the enclosure is capable of being flushed, so that it may easily be cleaned without liquid penetrating into the enclosure 6 of the stationary element S and there causing damage to the manipulator.

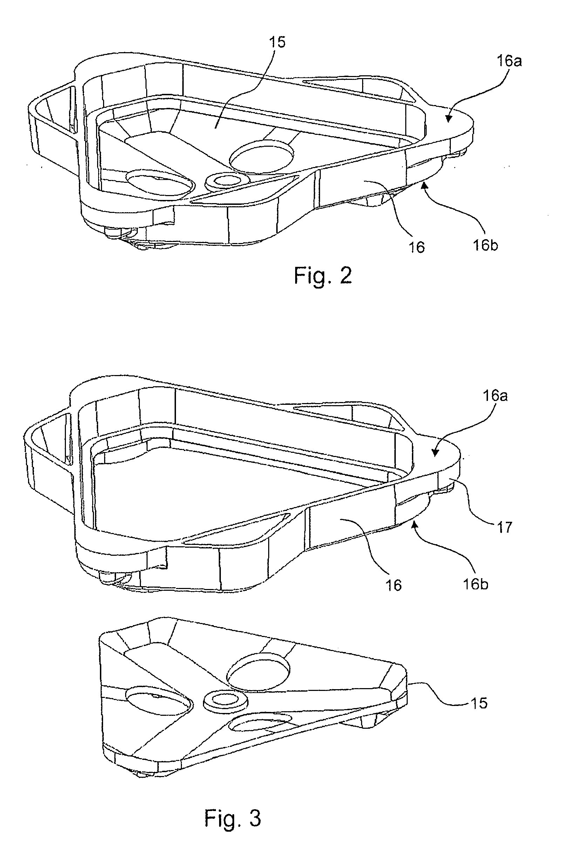

Fig. 2 shows a schematic view an embodiment of a complete base of the stationary element S of the present invention depicted as a perspective view from the side. The equipment inside the stationary element S is arranged to be enclosed in the enclosure 6, divided into the two parts, the upper cap 7 and the lower cap 8. The base shown in the figure is adapted to receive the two parts of the enclosure (6). A downwards directed wall of the upper cap 7 will be received by, and abut an upper surface 16a along the rim of the base, while the upwards directed wall of the lower cap 8 will be received and abut a lower surface 16b along the rim of the base.

An embodiment of the invention is illustrated in more detail in Fig. 3. Here it is shown that the base is accomplished by joining two separate parts, the first part being the base plate 15 and the second part being the base frame 16. Along a rim on one side of the base plate 15 a flat, circumferential path is arranged. The base frame 16 is attached to said path of the base plate 15 for forming the complete base of the stationary element S. This is illustrated in Fig. 3, wherein it is shown that the base can be formed by bringing the two parts together. The base frame 16 and the base plate 15 are joined by means of fastening members, such as bolts, screws, rivets, a welding seam, glue, etc. The base frame 16 includes attachment means 17, as the base frame is used for mounting purposes, i.e. the stationary element S can be suspended or mounted to an external structure in a predetermined way by way of utilizing the attachment means 17 of the base frame 16.

The enclosure 6 is then accomplished around the base in the same way as in the disclosed prior art, i.e. by arranging the downwards directed wall of the upper cap 7 to abut said upper surface 16a of the base frame 16 and in the same way arranging the upwards directed wall of the lower cap 8 to abut said lower surface 16b of the base frame. By pressing the upper 7 and lower 8 caps against said upper 16a and lower 16bsurfaces, respectively, a tight enclosure is obtained.

In this way, it is accomplished that the base is divided into at least two parts, one of them, the base plate 15 being, e.g., of a more complicated design and/or the heavier part. Further, said first part, the base plate 15 is completely enclosed within the enclosure 6 with no part of it exposed to the outside of the enclosure. Thus, it is possible to manufacture the base plate 15 from a cheaper material, e.g. a molded material, such as cast iron, grey cast iron, aluminum, a light metal, or the like.

According to the invention only one part of the base, namely the base frame 16, is exposed to the space surrounding the manipulator. Thus, only said base frame 16 needs to be made of a resistant material, such as stainless steel, a composite, or the like. Further, as the design of said base frame 16, most likely, is rather simple to its geometrical structure, it will also from this reason become cheaper to manufacture. In total, the measures arrived at by the embodeiments of the invention implies that the cost for the base can be reduced by a factor 10.

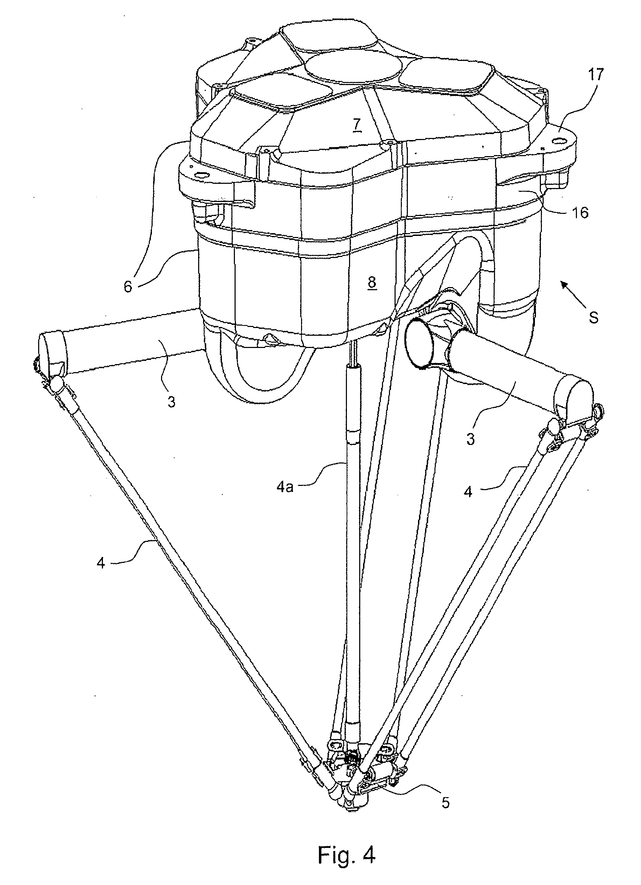

Fig. 4 shows a manipulator equipped with the base according to an aspect of the invention. In principle, it has almost the same exterior as the prior art manipulator.

The upper cap 7 and the lower cap 8 of the enclosure 6 can be made of stainless steel, a plastic, aluminum, light metal, or a composite, wherein the demands are such that these materials are resistant to flushing water for cleaning purposes.

### DEFINITION

In the description the term "lower" relates to an axial direction from the stationary element S towards the movable element 5, whilst "upper" is the direction opposite to that.

## Claims

1. A manipulator of a parallel kinematic structure with a stationary element (S) comprising a base (15, 16) supporting a plurality of drive means, an enclosure (6) and attachment means (17),
**characterized in that**
the base (15, 16) comprises a first part (15) supporting the plurality of drive means and a second part (16) comprising the attachment means (17), and
the first part (15) and the second part (16) are connected and arranged such that the first part (15) is completely enclosed within the enclosure (6), and the second part (16) is partially exposed to a space outside said enclosure (6).

2. The manipulator according to claim 1, wherein said first part (15) is a base plate of the base being a load carrying part of the base and wherein said second part (16) frames said base plate.

3. The manipulator according to claim 2, wherein said second part (16) forms a base frame at the rim of the base plate (16) and serves as a part carrying the load of the manipulator.

4. The manipulator according to claim 1, wherein said first part (15) is made of a first material and said second part (16) is made of a second material.

5. The manipulator according to claim 4, wherein said first material is a material from the group of: cast iron, grey cast iron, molded aluminum, molded light metal.

6. The manipulator according to claim 1, wherein said second material is a material from the group of: stainless steel, a composite.

7. The manipulator according to any of the preceding claims, wherein at least one of an upper cap (7) and a lower cap (8) forming said enclosure (6) is made of a material such as: stainless steel, a plastic, aluminum, light metal, a composite.

8. The manipulator according to claim 3, wherein said base frame (16) is attached to a path at one side of the base plate (15) by means of fastening members, such as bolts, screws, rivets, a welding seam, glue.

9. The manipulator according to any one of claims 3 and 8, wherein a wall of the upper cap (7) abuts an upper surface (16a) of the base frame (16).

10. The manipulator according to any one of claims 3, 8 and 9, wherein a wall of the lower cap (8) abuts a lower surface (16b) of the base frame (16).

11. A method for manufacturing a manipulator of a parallel kinematic structure with a stationary element (S) comprising a base (15, 16) supporting a plurality of drive means, an enclosure (6) and attachment means (17),
**characterized in that** the method comprises the steps of:
- forming said base from at least a first part (15) supporting the plurality of drive means and a second part (16) comprising the attachment means (17),
- arranging said first part (15) and said second part (16) such that the second part (16), only, is partially exposed to an environment outside said enclosure (6) and
- connecting said first part (15) and said second part (16).

12. The method according to claim 10, further including the steps of:
- arranging said first part (15) to be a load carrying part of the base,
- forming said second part (16) as a frame surrounding said first part (15).
